## Europäisches Patentamt
## European Patent Office
## Office européen des brevets

(19)

(11) Veröffentlichungsnummer : **0 339 626 B1**

(12)

# EUROPÄISCHE PATENTSCHRIFT

(45) Veröffentlichungstag der Patentschrift :
**29.07.92 Patentblatt 92/31**

(51) Int. Cl.$^5$ : **G01F 1/68**, G01P 5/10,
G01K 13/02

(21) Anmeldenummer : **89107610.1**

(22) Anmeldetag : **27.04.89**

(54) **Sensor.**

(30) Priorität : **29.04.88 DE 3814576**

(43) Veröffentlichungstag der Anmeldung :
**02.11.89 Patentblatt 89/44**

(45) Bekanntmachung des Hinweises auf die
Patenterteilung :
**29.07.92 Patentblatt 92/31**

(84) Benannte Vertragsstaaten :
**CH DE FR GB LI**

(56) Entgegenhaltungen :
**Keine Entgegenhaltungen**

(73) Patentinhaber : **GEBR. SCHMIDT FABRIK FÜR
FEINMECHANIK
Feldbergstrasse 1
W-7742 St. Georgen Schwarzwald (DE)**

(72) Erfinder : **Sondergeld, Manfred, Dr.
Glasbachweg 18
W-7742 St. Georgen/Schwarzwald (DE)**
Erfinder : **Roso, Bruno
Lochhofstrasse 17
W-7743 Furtwangen (DE)**

(74) Vertreter : **Witte, Alexander, Dr.-Ing. et al
Witte, Weller & Gahlert Patent- und
Rechtsanwälte Augustenstrasse 7
W-7000 Stuttgart 1 (DE)**

## Beschreibung

Die Erfindung betrifft einen Sensor zum Umwandeln eines physikalischen Parameters eines strömenden Mediums in ein elektrisches Signal, mit einem zylinderförmigen Träger, dessen Außenfläche vom Medium angeströmt wird und der ein temperaturempfindliches Element trägt, dessen Anschlußdrähte mit einer elektronischen Auswerteeinheit in Verbindung stehen.

Ein derartiger Sensor ist aus der DE-A 35 09 416 bekannt.

Der bekannte Sensor, der zur Bestimmung des Durchflusses eines strömenden Mediums dient, weist ein langgestrecktes, hohlzylindrisches Gehäuse auf, auf dessen vordere Stirnseite ein trichterartiger, sich nach vorne verjüngender Kopf aufgesetzt ist, der in einem zylinderförmigen Träger endet. An der vorderen Stirnseite des zylindrischen Trägers befindet sich eine metallische, d.h. gut wärmeleitende Platte, die von außen durch das Medium angeströmt wird. Auf der Innenseite der metallischen Platte ist ein temperaturempfindliches Element angeordnet, dessen Anschlußdrähte zu einer Auswerteeinheit geführt werden.

Der bekannte Sensor, der an der vorderen Meßstelle exakt kreiszylindrisch mit planer runder Stirnfläche ausgebildet ist, hat jedoch den Nachteil, daß es an der Meßstelle zu Verwirbelungen des Mediums kommen kann. Dies gilt insbesondere bei einer Fehljustierung des Sensors, weil die metallische Platte an der Stirnseite bei leicht schiefer Montage des Sensors nicht mehr tangential, d.h. in einer Richtung parallel zu ihrer Oberfläche angeströmt wird, sondern vielmehr unter einem endlichen Winkel, was zu Turbulenzen und damit zu Meßfehlern führt, weil im Bereich von Turbulenzen Geschwindigkeitsänderungen des Mediums auftreten können, die dann wiederum Meßfehler zur Folge haben.

Es sind ferner thermische Strömungssensoren bekannt, bei denen das Fühlerelement an der Meßstelle zylindrisch ausgebildet ist, wobei die Hauptanströmrichtung des Mediums senkrecht zur Zylinderlängsachse erfolgt. Eine derartige Zylinderkopfsonde läßt sich mit einem relativ geringen Zylindervolumen realisieren, wodurch die Sonde ein günstiges Ansprechverhalten und eine hohe Meßempfindlichkeit zeigt, jedoch den Nachteil aufweist, daß die Richtungsabhängigkeit in störender Weise sehr deutlich ausgeprägt ist. Bereits geringe Abweichungen vom idealen Anströmwinkel im Bereich von etwa $\pm 10°$ (sowohl positive als auch negative Abweichung vom idealen Anströmwinkel sind möglich) führen zu erheblichen Sollwert-Abweichungen. Bildet man einen Quotient aus Sollwertabweichung und dem Sollwert, so resultieren Abweichungen im Bereich bis zu 20 %. Diese Abweichungswerte erhöhen sich in Bereiche bis 50 %, falls bis zu 30° vom vorgegebenen idealen Anströmwinkel abgewichen wird. Daher verlangen Sensoren mit Zylinderkopfsonden eine exakte Justierung, um zutreffende Meßergebnisse zu erbringen.

Es sind auch thermische Strömungssensoren bekannt, bei denen das Fühlerelement kugelförmig ausgebildet ist. Eine Kugelkopfsonde besitzt eine nahezu richtungsunabhängige Strömungs-Charakteristik, die insbesondere in der Lüftungs- und Klimatechnik erwünscht ist. Das temperaturempfindliche Sensorelement besteht aus einer temperaturabhängigen Widerstandschicht, die auf der Kugeloberfläche aufgebracht ist. Diese günstige Anordnung ist sehr aufwendig in der Herstellung und daher nicht wirtschaftlich. Eine weitere Möglichkeit besteht darin, das Sensorelement im Zentrum der Kugel einzubetten, um eine gleichmäßige Temperaturverteilung an der Kugeloberfläche und damit die erstrebte Richtungsunabhängigkeit zu erhalten. Allerdings bedingt die endliche Größe des Sensorelements ein relativ großes Kugelvolumen, was in einer hohen Wärmekapazität und einen starken radialen Temperaturabfall zur Kugeloberfläche hin resultiert. Dies hat den Nachteil, daß derartige Kugelkopfsonden ein äußerst langsames Ansprechverhalten bei Strömungsänderungen und eine geringe Meßempfindlichkeit aufweisen.

Aus der DE-A-35 42 788 ist eine Vorrichtung zur thermischen Massenstrommessung von Gasen und Flüssigkeiten bekannt. Bei dieser bekannten Vorrichtung wird ein am Ende verschlossenes Rohr verwendet, bei dem in der Nähe des Endes des Rohrs ein temperaturabhängiger Meßwiderstand angeordnet und das Rohr in der Höhe des Meßwiderstandes mit einer radialen Durchbohrung versehen ist, so daß der Meßwiderstand für radial anströmende Luft zugänglich ist.

Eine ähnliche Anordnung ist aus der US-A-3,927,567 bekannt, wo ein ebenfalls rohrförmiges Sensorgehäuse, allerdings nur einseitig, mit einem Langloch in ungefähr halber Länge des rohrförmigen Gehäuses versehen ist. Dieser bekannte Sensor wird derart im Meßstrom angeordnet, daß das Langloch in einer Richtung von 90° zum Gasstrom weist, der somit tangential an diesem Langloch vorbeistreicht.

Aus der DE-A-27 10 473 ist eine Schaltungsanordnung zur Bestimmung der Wärmeverlustgeschwindigkeit bekannt, bei der Dünnfilm-Meßwiderstände entweder an einer Engstelle eines im Radialschnitt quadratischen Venturi-Rohres oder an der Zylindermantelfläche eines stabförmigen Sensors angeordnet sind.

Aus der GB-B-1 571 303 ist ein Sensor zum Messen von Massenströmen bekannt, bei dem im Inneren eines tonnenförmigen Sensorelementes Meßelemente angeordnet sind. Das Sensorelement ist rotationssymmetrisch und wird in Richtung der Rotationsachse angeströmt, wobei geringfügige Anströmfehler möglich sind.

Schließlich ist aus der US-A-3 604 261 noch ein thermisches Anemometer bekannt, bei dem ein zylindrisches Sensorelement im wesentlichen radial angeströmt wird. Dieser bekannte Sensor hat eine ausgeprägte Richtungscharakteristik, so daß drei in drei aufeinander senkrecht stehenden Koordinatenrichtungen angeordnete Sensorelemente eingesetzt werden können, um sektorielle Messungen von Strömungen beliebiger Richtungen zu ermöglichen. Aus der selben Druckschrift ist auch ein exakt sphärisches Sensorelement bekannt.

Die vorstehend erläuterten Sensorelemente haben den gemeinsamen Nachteil, daß sie eine ausgeprägte Richtungscharakteristik aufweisen, d.h., daß das Meßergebnis in starkem Maße von der Anströmrichtung des umströmenden Mediums abhängig ist. Dies ist teilweise sogar ausdrücklich gewollt, um Messungen mit mehreren Sensorelementen in verschiedenen Koordinatenrichtungen zu ermöglichen.

Der Erfindung liegt demgegenüber die Aufgabe zugrunde, einen Sensor der eingangs genannten Art dahingehend weiterzubilden, daß er unempfindlich gegenüber Justagefehlern, somit richtungsunabhängig ist, schnell auf Strömungs-Änderungen anspricht und eine hohe Meßempfindlichkeit aufweist.

Erfindungsgemäß wird die Aufgabe dadurch gelöst, daß beidseits an den zylinderförmigen Träger in Längsrichtung je eine zylindersymmetrische Anströmkappe angesetzt ist, die eine an den Träger angrenzende, im wesentlichen radiale Endfläche sowie einen sich in vom Träger abgewandter Richtung verjüngendem Querschnitt aufweist, wodurch ein hantelförmiger Sensorkopf geschaffen ist.

Die hantelförmige Ausbildung des Sensorkopfes vereinigt somit die vorteilhaften Wirkungen sowohl der kugelig als auch der zylindrisch ausgebildeten Sonde, so daß die erfindungsgemäße Aufgabe vollkommen gelöst wird.

Bei einer bevorzugten Ausgestaltung der Erfindung sind beide Anströmkappen spiegelsymmetrisch zum zylinderförmigen Träger angeordnet und eine Kappe ist an ihrer sich verjüngenden Spitze mit einem Sensorgehäuse verbunden.

Diese Maßnahme hat den Vorteil, daß durch die spiegelsymmetrische Ausbildung sehr gleichmäßige, richtungsunabhängige Strömungsverhältnisse geschaffen werden, die durch die notwendige Verbindung zum Sensorgehäuse über die Spitze einer Kappe nicht ungünstig beeinflußt werden.

Bei einer bevorzugten Ausgestaltung der Erfindung verlaufen die beiden gegenüberliegenden, inneren Endflächen der Anströmkappen senkrecht zur Mantellinie des zylinderförmigen Trägers.

Diese Maßnahme hat den Vorteil, daß im zylinderförmigen Bereich zwischen den Anströmkappen, d.h. also im "Griffbereich" der "Hantel" eine senkrecht auf die Mantellinien zu gerichtete Strömung erreicht wird. Diese Strömungsverhältnisse tragen zu einem schnellen Ansprechverhalten und zu einer hohen Meßempfindlichkeit des zylinderförmigen Trägers bei.

Bei bevorzugten Ausgestaltungen der Erfindung sind die Anströmkappen als Kegel, Kegelsegment, Kegel mit abgerundeter Kappe, Halbkugel, Kugelkappe oder balliger Körper ausgebildet.

Diese Maßnahmen haben den Vorteil, daß durch die glatte strömungsgünstigen Ausgestaltungen der Anströmkappen die Ausbildung von quasi-sphärischen Richtungscharakteristiken unterstützt wird, was zu einer erhöhten Richtungsunabhängigkeit über einen großen Anströmwinkelbereich führt. Ferner weisen die Anströmkappen durch die aerodynamisch günstige Gestaltung eine geringe Neigung zur Verschmutzung auf, die außerdem, falls geringfügige Verschmutzungen auftreten sollten, leicht zu reinigen sind, ohne daß dabei Manipulationen am Meßelement, das sich auf dem zylinderförmigen Träger befindet, durchgeführt werden müssen.

Bei einer bevorzugten Ausgestaltung der Erfindung ist der Träger hohlzylindrisch ausgebildet und ist auf einem zylindrischen Verbindungsstück zwischen den Anströmkappen aufgenommen.

Diese Maßnahme hat den Vorteil, daß das Meßelement in einem kompakten leichten und robusten Aufbau enthalten ist, der stoß- und berührungsunempfindlich gegenüber äußeren Einflüssen ist, woraus eine für den praktischen Einsatz verbesserte Handhabbarkeit unter Aufrechterhaltung einer hohen Meßempfindlichkeit resultiert.

Bei einer bevorzugten Ausgestaltung der Erfindung ist das Verbindungsstück länger als der hohlzylindrische Träger und die Anströmkappen sind thermisch vom Träger entkoppelt.

Diese Maßnahme hat den Vorteil, daß im temperaturempfindlichen Element eine optimale Wärmeführung und eine Wärmeübertragung mit hohem Nutzfaktor bei geringer Leistungsaufnahme geschaffen ist.

Bevorzugt ist ferner, daß das Verbindungsstück als hohlzylindrisches Wärmeisolationsrohr ausgebildet ist, auf das der hülsenförmige Träger geschoben ist.

Diese Maßnahme hat den Vorteil, daß besonders einfach und effektiv eine Wärmeentkopplung bzw. thermische Isolierung zwischen Träger und Verbindungsstück geschaffen ist, die außerdem zu einer Materialeinsparung mit daraus resultierender Gewichtsminderung des Sensores führt, dessen hohlzylindrischer Aufbau jedoch die ausreichende Stabilität aufweist, um auch in Medien mit hoher Strömungsgeschwindigkeit eingesetzt werden zu können.

Bevorzugt ist in diesem Zusammenhang ferner, daß die Anströmkappen als Hohlkörper ausgebildet sind.

Diese Maßnahme hat den Vorteil, daß unter Beibehaltung der zuvor erwähnten Stabilität ein insgesamt leichtgewichtiger Sensorkopf resultiert, dessen Meßelement bei geringer Leistungsaufnahme ein schnelles Ansprechverhalten und eine hohe Meßempfindlichkeit aufweist.

In einer weiteren bevorzugten Ausgestaltung der Erfindung ist der zylinderförmige Träger aus gut wärmeleitendem Material, vorzugsweise aus Metall und der verbleibende Teil des hantelförmigen Kopfes aus schlecht wärmeleitendem Material, vorzugsweise aus Kunststoff, hergestellt.

Diese Maßnahmen haben den Vorteil, daß eine hervorragende Wärmeführung und Wärmeübertragung mit hohem Nutzfaktor bei geringer Leistungsaufnahme möglich ist, woraus ein besonders schnelles Ansprechverhalten, eine hohe Meßempfindlichkeit und ein großer Dynamikbereich resultieren.

Bei einer weiteren bevorzugten Ausgestaltung der Erfindung weist das temperaturempfindliche Element einen Keramik-Chip auf, der mit Dünnfilm-Widerständen beschichtet ist (Heizschicht und Meßschicht), und der über eine gut wärmeleitende Vergußmasse in den zylinderförmigen Träger eingebettet ist.

Diese Maßnahmen haben den Vorteil, daß die gegenüber mechanischen Einflüssen empfindlichen Meßelemente stoß- und berührungsunempfindlich in den hohlzylindrischen Träger eingebettet sind, wobei es die Vergußmasse ermöglicht, einerseits eine glatte zylindrische Oberfläche des Trägers zu schaffen, wodurch ungestörte Strömungsverhältnisse um den Träger möglich sind, der dadurch außerdem einfach zu reinigen ist, ohne daß die Meßempfindlichkeit beeinflußt wird. Andererseits ist eine hervorragende Wärmeführung im Bereich des temperaturempfindlichen Elements ermöglicht.

Bevorzugt ist ferner, daß die eine Kappe an ihrer Spitze über ein zunächst zylindrisches Teil, das sich anschließend in ein konisches Teil erweitert, mit dem Sensorgehäuse verbunden ist.

Diese Maßnahme hat den Vorteil, daß die notwendige Verbindung zwischen hantelförmigem Kopf und Sensorgehäuse nur unwesentlich die Strömungsverhältnisse im Bereich des Hantelkopfes beeinflußt. Daraus resultiert eine besonders hohe Meßgenauigkeit.

Bevorzugt in diesem Zusammenhang ist auch, daß das zylindrische Teil etwa den selben Durchmesser wie der zylindrische Träger aufweist, und daß sich das konische Teil zu einem Durchmesser erweitert, der zumindest so groß ist wie der größte Durchmesser der Anströmkappen.

Diese Maßnahme hat den Vorteil, daß die notwendige Verbindung zwischen Sensorkopf und Sensorgehäuse die Strömungsverhältnisse im hantelförmigen Kopfbereich nahezu unbeeinflußt läßt.

Weitere Vorteile ergeben sich aus der Beschreibung und den beigefügten Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:

Fig. 1 schematisch eine Seitenansicht eines ersten Ausführungsbeispiels eines erfindungsgemäßen Sensors;

Fig. 2 schematisch eine perspektivische Ansicht des Sensors von Fig. 1 im Bereich des hantelförmigen Sensorkopfes;

Fig. 3 einen Längsschnitt eines weiteren Ausführungsbeispiels eines erfindungsgemäßen Sensors im äußersten Endbereich eines hantelförmigen Sensorkopfes, wobei lediglich eine äußere "Hantelscheibe" des hantelförmigen Kopfes dargestellt ist;

Fig. 3a ein Querschnitt längs der Linie III-III von Fig. 3;

Fig. 4 eine graphische Darstellung der Abweichung des Sollwertes in Abhängigkeit vom Anströmwinkel bei einem in Fig. 3 dargestellten erfindungsgemäßen hantelförmigen Sensors im Vergleich zu einem lediglich zylindrischen Sensor;

Fig. 5 stark schematisiert eine Seitenansicht eines dritten Ausführungsbeispiels eines erfindungsgemäßen Sensors im Bereich des hantelförmigen Sensorkopfes;

Fig. 6 stark schematisiert eine Seitenansicht eines vierten Ausführungsbeispiels eines erfindungsgemäßen Sensors im Bereich des hantelförmigen Sensorkopfes, und

Fig. 7 stark schematisiert eine Seitenansicht eines fünften Ausführungsbeispiels eines erfindungsgemäßen Sensors im Bereich des hantelförmigen Sensorkopfes;

Fig. 8 stark schematisiert eine Seitenansicht eines sechsten Ausführungsbeispiels eines erfindungsgemäßen Sensors im Bereich des hantelförmigen Sensorkopfes;

Fig. 9 einen vergrößerten Ausschnitt aus der Darstellung gemäß Fig. 8 mit angegebenen Maßen für ein reales Ausführungsbeispiel.

Die in den Figuren dargestellten Sensoren dienen zum Erfassen von physikalischen Parametern von strömenden Medien, wobei unter physikalischen Parametern im Rahmen der vorliegenden Erfindung die Strömungsgeschwindigkeit, die Temperatur, der Massenstrom und dgl. des strömenden Mediums, z.B. Luft, Gase oder Flüssigkeiten verstanden werden sollen.

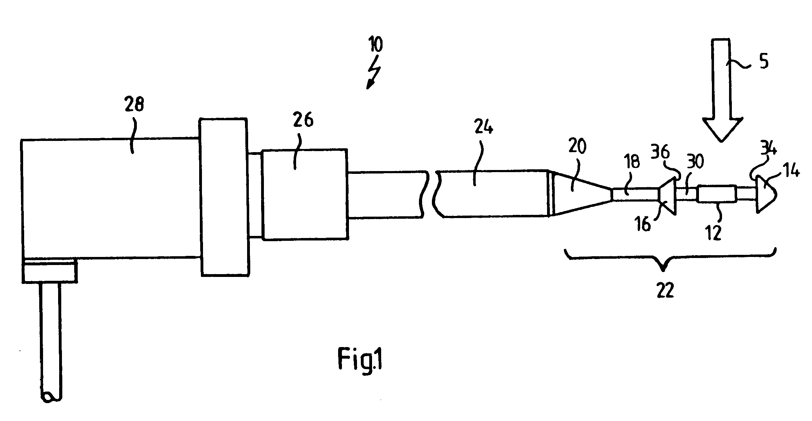

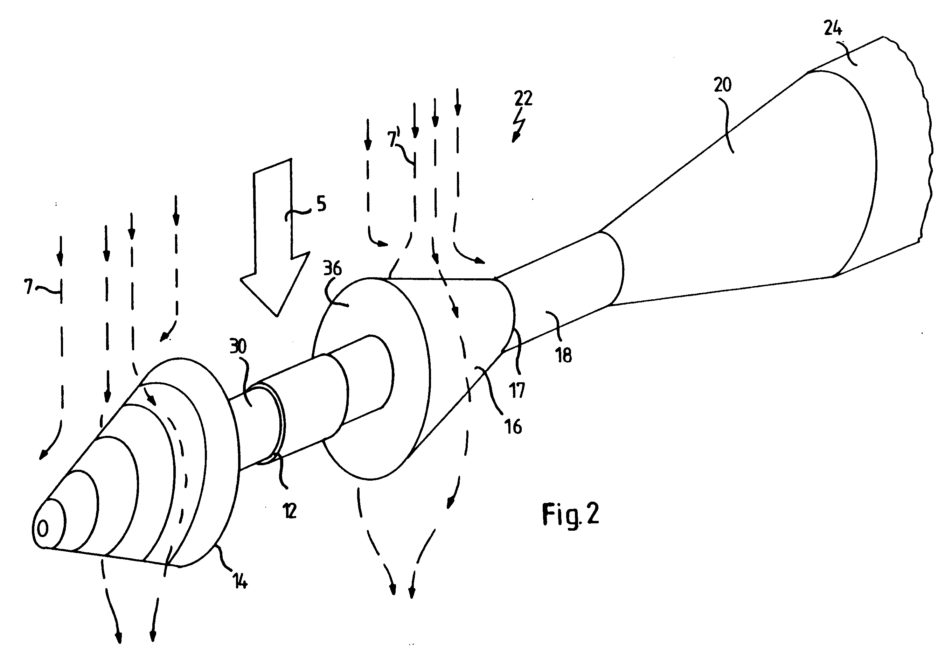

Ein in Fig. 1 und 2 dargestellter Sensor 10 weist ein Sensorgehäuse 28 auf, das mit einer hier nicht näher dargestellten elektronischen Auswerteeinheit verbunden ist.

Im Sensorgehäuse 28 ist über ein Montagegewinde 26 ein Fühlerrohr 24 angebracht, an dessen äußerem, vom Sensorgehäuse 28 abgewandten Ende ein hantelförmiger Kopf 22 angeordnet ist.

Der hantelförmige Kopf 22 geht vom Fühlerrohr 24 über ein konisches Teil 20 in ein durchmessergeringeres zylindrisches Teil 18 über, an das sich eine kegelstumpfförmige Kappe 16 anschließt, deren abgestumpfte Kegelspitze durchmessergleich zum zylindrischen Teil 18 ist.

Von der senkrecht zur Längsachse des zylindrischen Teils 18 verlaufenden Endfläche 36, die zugleich die Bodenfläche der kegelstumpfförmigen Kappe 16 darstellt, erstreckt sich ein zylindrisches Verbindungsstück 30 weg, das durchmesser- und achsgleich zum zylindrischen Teil 18 ist.

Am der Kappe 16 gegenüberliegenden Ende des Verbindungsstückes 30 ist eine kegelförmige Kappe 14 mit abgerundeter Spitze angeordnet.

Die bodenseitige Endfläche 34 der kegelförmigen Kappe 14 ist der Endfläche 36 der kegelstumpfförmigen Kappe 16 zugewandt und weist den selben Durchmesser wie diese auf.

Auf das Verbindungsstück 30 ist ein zylinderförmiger Träger 12, der als zylindrische Meßhülse ausgebildet ist, aufgeschoben, und zwar derart, daß er mittig zwischen den beiden Endflächen 34, 36 auf dem Verbindungsstück 30 zum liegen kommt.

Der Träger 12 ist kürzer als das Verbindungsstück 30 ausgebildet, so daß zwischen den äußeren Enden des Trägers 12 und den Endflächen 34, 36 der Kappen 14, 16 jeweils ein Teil des Verbindungsstücks 30 gelegen ist.

Die Hauptanströmrichtung des zu messenden Mediums 5 ist, wie in Fig. 1 und 2 durch einen Pfeil dargestellt, senkrecht zur Längsachse des Sensors 10.

Wie in Fig. 2 durch Strömungspfeile 7, 7′ angedeutet, sorgen die Endflächen 34 bzw. 36 der Kappen 14 bzw. 16 einerseits sowie die Kegel- bzw. Kegelstumpfflächen andererseits dafür, daß das anströmende Medium 5 im Bereich der Kappen in einer quasi-sphärischen Richtungscharakteristik um diese gelenkt wird, daß aber andererseits im Bereich des Trägers 12 eine direkte Anströmung des Trägers 12 erfolgt.

Die Kappen 14, 16 sorgen für eine Aufrechterhaltung dieser Strömungscharakteristik auch dann, falls die Längsachse des Sensors 10 unter einem Winkel zur Hauptanströmrichtung verläuft.

Dies ist so zu erklären, daß die Anströmkappen 14, 16 dafür sorgen, daß in einem breiten Anströmbereich der sowohl positive als auch negative Anströmwinkel umfaßt, sich die Strömungscharakteristik im Bereich des Hantelkopfes nicht ändert, d.h., daß bei vorgegebenen Strömungsparametern ein Verschwenken des Sensors keine erheblichen Abweichungen vom Sollwert ergeben. Daher ist es dann nicht notwendig, einen Sensor exakt zu justieren bzw. es können auch Strömungen mit nicht genau bekannten Strömungsrichtungen exakt gemessen werden.

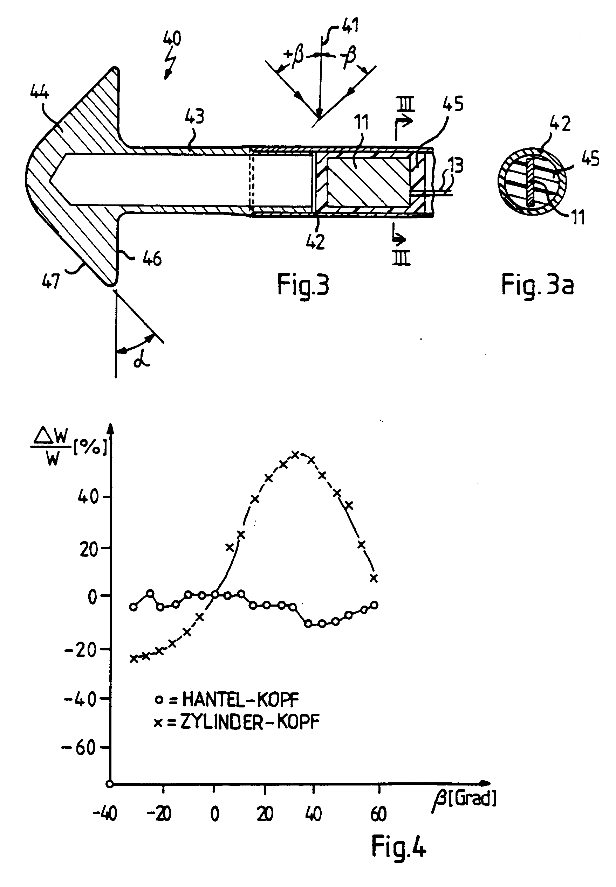

Der Einfluß des Anströmwinkels auf das Meßergebnis ist in dem in Fig. 4 dargestellten Diagramm aufgezeichnet, wobei diese Messungen mit einem in Fig. 3 und 3a dargestellten Sensor 40 durchgeführt wurden, der im wesentlichen der Ausführung des Sensors 10 von Fig. 1 und 2 entspricht.

Der Sensor 40 ist im vordersten Endbereich als kegelförmige Kappe 44 mit verrundeter Spitze dargestellt, die als Hohlkappe ausgebildet ist und einstückig mit einem rohrförmigen Verbindungsstück 43 ausgebildet ist.

Das rohrförmige Verbindungsstück 43 trägt einen hülsenförmigen Träger bzw. eine Hülse 42, die außen auf das Verbindungsstück 43 aufgeschoben ist. Im Endbereich der Hülse 42 weist das Verbindungsstück 43 eine Verdickung auf, so daß bei aufgeschobener Hülse 42 eine glatte zylindrische Fläche im Bereich des "Hantelgriffes" geschaffen ist, so daß Kanten, die eine Wirbelbildung versachen könnten, vermieden sind.

Der als einstückiger Hohlkörper ausgebildete Zusammenbau aus Verbindungsstück 43 und Kappe 44, ist aus einem schlecht wärmeleitenden Kunststoffmaterial hergestellt, und kann lösbar in eine entsprechend ausgebildete spiegelbildlich zur Kappe 44 angeordnete weitere Kappe eingesteckt werden, die in Aufbau und Form der in Fig. 1 dargestellten Kappe 16 entspricht und entsprechend mit dem Sensorgehäuse 28 verbunden ist.

Die geneigte Fläche 47 der Kappe 44 geht in einem spitzen Winkel $\alpha = 45°$ in die senkrecht zur Längsachse des Verbindungsstücks 43 stehende kreisringförmige Fläche 46 der Kegelkappe 44 über. Der Winkel $\alpha$ wird als Leitwinkel bezeichnet und bestimmt die Aufteilung des Mediumhauptstromes 41 im Bereich der Anströmkappen.

Die Hülse 42 besteht aus einem gut wärmeleitenden Material, vorzugsweise Metall, im in Fig. 3 dargestellten Ausführungsbeispiel aus Aluminium.

Die Hülse 42 beinhaltet das Sensorelement 11, das im in den Fig. 3 und 3a dargestellten Ausführungsbeispiel aus einem Keramik-Chip mit den Abmessungen 2,2 x 3,0 x 0,3 mm besteht. Der Keramik-Chip ist an einer äußeren Seite mit einer (hier nicht näher dargestellten) Heizschicht in Form eines Dünnfilmwiderstandes und an einer Innenseite mit einer Meßschicht ebenfalls in Form eines Dünnfilmwiderstandes beschichtet. Das Sensorelement 11 selbst ist mittels einer gut wärmeleitenden Vergußmasse 45, z.B. einem Zwei-Komponenten-Epoxidharz, im Innenraum der Hülse 42 eingebettet. Zuleitungsdrähte 13, die einen Durchmesser von ca. 0,1 mm, vorzugsweise 0,05 mm haben, werden durch die kegelstumpfförmige Kappe zur elektrischen Auswerteeinheit geführt.

Der rohrförmige Abschnitt 43 zwischen Hülse 42 und Fläche 46 der Kappe 44 weist eine Länge von mindestens 3 mm, im dargestellten Ausführungsbeispiel 5 mm auf, und besitzt einen Außendurchmesser von etwa 2,4 mm und eine Wandstärke von etwa 0,25 mm.

Als positive Anströmwinkel (+ ß ) werden solche bezeichnet, die einer Anströmrichtung abweichend von der Hauptanströmrichtung 41 entsprechen, die also zwischen Hauptanströmungsrichtung 41 und Längsachse in Richtung Kappe 44 einen geringeren Winkel als 90° aufweisen.

Dementsprechend sind negative Anströmwinkel (- ß ) solche, die von dieser Anströmrichtung auf die Kappe 44 gesehen, mehr als 90° betragen.

Die Summe der Beträge der Winkel ß stellen den Anströmbereich dar.

Im Diagramm von Fig. 4 ist als Abszisse die Abweichung der Anströmwinkel aufgetragen, wobei der Wert 0 dem Anströmwinkel von 90° (Hauptströmungsrichtung 41 in Fig. 3) entspricht.

Als Ordinate ist der Quotient $\Delta$ W/W in Prozent aufgetragen, der ein Maß für die Abweichung vom Sollwert W (Strömungsgeschwindigkeit) darstellt.

Die im Diagramm von Fig. 4 mit Kreisen eingetragenen Meßpunkte entsprechen Messungen, die mit einem Sensor 40 aus Fig. 3 durchgeführt wurden.

Aus dem Diagramm von Fig. 4 ist zu entnehmen, daß bei negativen Anströmwinkeln bis - 30° und bei positiven Anströmwinkeln bis + 60° nur geringfügige Abweichungen vom Sollwert im Bereich von etwa 5 % zu beobachten sind.

Der erfindungsgemäße Sensor liefert daher in einem Anströmbereich von etwa 90° (- 30° bis + 60°) unverfälschte Meßergebnisse.

Im Diagramm von Fig. 4 entsprechen die mit einem Kreuz dargestellten Meßergebnisse einem Sensor mit einem lediglich zylinderförmigen Sensorkopf, d.h. ohne die Anströmkappen.

Aus diesen Meßwerten ist zu entnehmen, daß bereits geringe Abweichungen aus der Hauptanströmungsrichtung 41 bei Sensormeßköpfen mit Zylinderform zu erheblichen Abweichungen vom vorgegebenen konstanten Strömungswert führen, die beispielsweise bei positiven Anströmwinkeln im Bereich von 30° bis zu 50 % betragen.

Der in Fig. 4 dargestellte Vergleich zeigt eindrucksvoll die Richtungsunabhängigkeit des erfindungsgemäßen Strömungssensors mit Hantelkopf über einen großen Anströmwinkelbereich.

Gleichzeitig bleibt die hohe Meßempfindlichkeit und das schnelle Ansprechverhalten beim erfindungsgemäßen Sensor mit Hantelkopf erhalten.

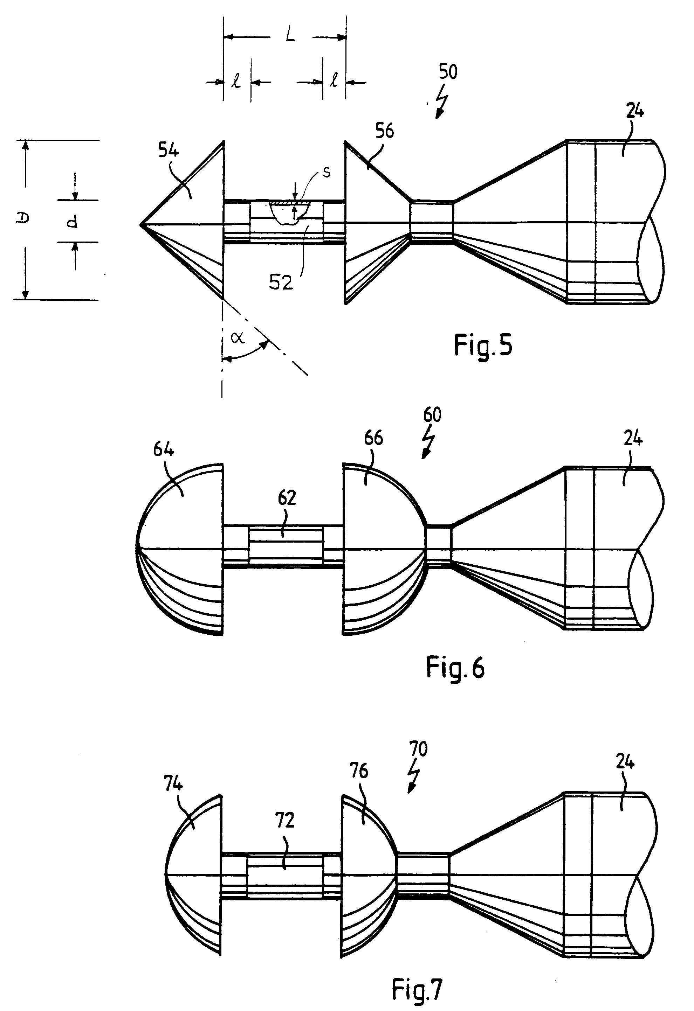

In den Fig. 5 bis 7 sind drei weitere Ausführungsbeispiele eines erfindungsgemäßen Sensors mit hantelförmigem Kopf dargestellt, die jeweils mit einem Fühlerrohr 24, wie es in Fig. 1 dargestellt ist, verbunden sind. Dies macht deutlich, daß verschiedene geometrische Ausgestaltungen an hantelförmigen Sensorköpfen mit einem bestimmten Sensorgehäuse austauschbar verbindbar sind.

Bei der in Fig. 5 dargestellten Ausführung eines erfindungsgemäßen Sensors 50 ist die äußere Anströmkappe 54 als Spitzkegel ausgebildet, dessen Leitwinkel etwa 45° beträgt. Auf dem rohrförmigen Verbindungsstück zwischen der entsprechenden spiegelsymmetrisch angeordneten Kappe 56 ist ein Träger 52 angeordnet, der das temperaturempfindliche Element enthält.

Die Kappe 56 ist dann entsprechend, wie in Fig. 1 dargestellt, über ein zylindrisches und daran anschließend sich konisch erweiterndes Teil mit dem Fühlerrohr 24 verbunden.

Bei dem in Fig. 5 dargestellten Ausführungsbeispiel sind verschiedene typische Abmessungen eingetragen, wie sie zweckmäßigerweise bei praktischen Ausführungsbeispielen erfindungsgemäßer Sensoren gewählt werden. Dabei bezeichnet $\alpha$ den sogenannten Leitwinkel, der zweckmäßigerweise im Bereich zwischen 30° und 90° eingestellt wird. D ist der größte Durchmesser der Anströmkappe 54 bzw. 56 und L ist der Abstand zwischen den inneren Leitflächen der beiden Anströmkappen 54, 56. Das Verhältnis D/L beträgt zweckmäßigerweise zwischen 0,3 und 1,0. l bezeichnet die Länge des Trägers 52, d.h. des Wärmeisolationsrohres, während d dessen mittleren Durchmesser und s dessen Wandstärke bezeichnet. Bevorzugt beträgt der sogenannte geometrische Wärmedurchgangsfaktor ds/l weniger als 0,5 mm.

Ein praktisches Ausführungsbeispiel eines Sensors 50 gemäß Fig. 5 war mit l = 1,5 mm, L = 10,0 mm, d = 2,3 mm, D = 8,5 mm und s = 0,25 mm dimensioniert.

Der so dimensionierte Sensor 50 zeichnete sich aus durch eine weitgehende Richtungsunabhängigkeit, geringe Leistungsaufnahme und einen hohen thermischen Nutzfaktor.

Im in Fig. 6 dargestellten Ausführungsbeispiel eines erfindungsgemäßen Sensors 60 ist die äußerste Kappe 64 als Halbkugel ausgebildet, die über ein rohrförmiges Verbindungsstück mit einer entsprechenden, halbkugeligen, spiegelsymmetrisch zu ihr angeordneten Kappe 66 verbunden ist, die dann wiederum, wie zuvor beschrieben, über ein zylindrisches und konisches Teil mit dem Fühlerrohr 24 verbunden ist. Auch bei dieser Ausführung ist mittig ein das temperaturempfindliche Element enthaltender Träger 62 vorgesehen. Der Leitwinkel beträgt bei dieser Ausführungsform etwa 90°.

Bei der in Fig. 6 dargestellten Ausführung ist eine besonders günstige quasi-sphärische Strömungscharakteristik im Bereich des hantelförmigen Sensorkopfes zu erreichen.

Bei einem in Fig. 7 dargestellten weiteren Ausführungsbeispiel eines erfindungsgemäßen Sensors 70 ist die äußere Kappe 74 als Kugelkappe ausgebildet, die, wie zuvor beschrieben, über ein rohrförmiges Verbindungsstück mit einer entsprechend ausgebildeten Kappe 76 verbunden ist. Der Träger 72 ist wiederum dann mittig zwischen den spiegelsymmetrischen, ringförmigen und senkrecht dazu verlaufenden Bodenflächen der Kugelkappen angeordnet. Auch hier ist eine quasi-sphärische Richtungscharakteristik der Strömung zu beobachten.

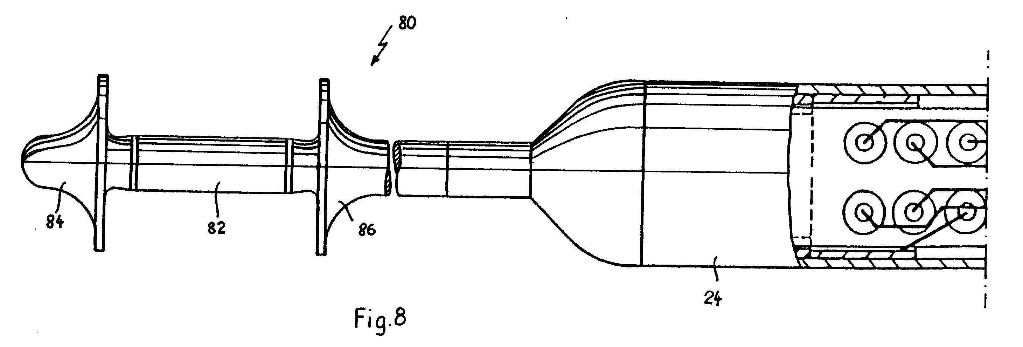

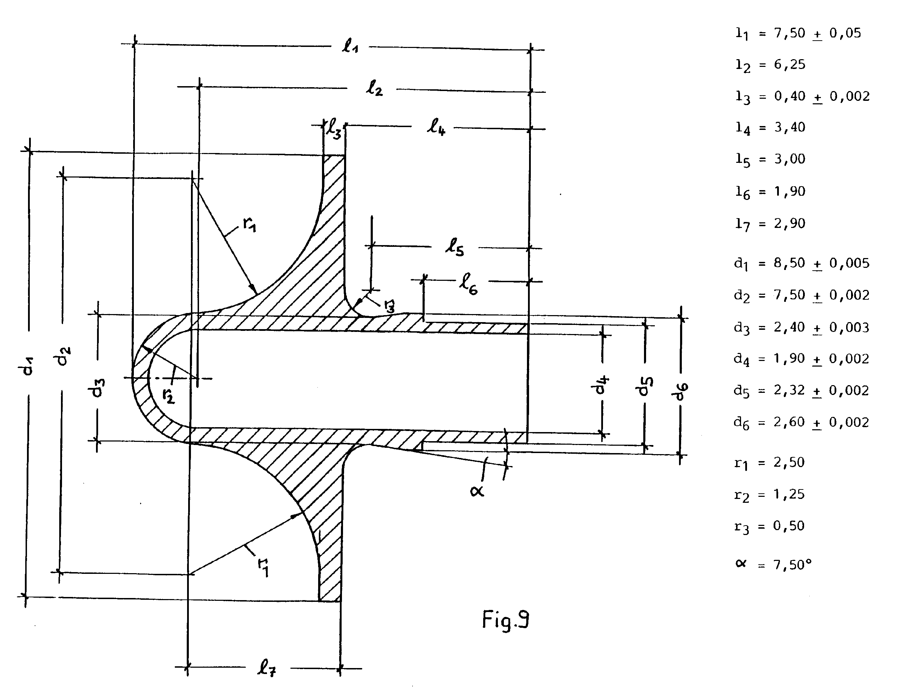

Die Fig. 8 und 9 zeigen ein weiteres Ausführungsbeispiel eines erfindungsgemäßen Sensors 80 mit einem Träger 82 und Anströmkappen 84, 86, bei dem die äußere Anströmkappe 84 knopfartig nach außen vorsteht. Dieses Ausführungsbeispiel zeichnet sich ferner dadurch aus, daß die äußere Leitfläche zum Fluid hin konkav gekrümmt ist, die Randfläche der äußeren Leitfläche zur inneren Leitfläche parallel verläuft und beide Leitflächen durch eine umlaufende Zylindermantelfläche mit einer von Null verschiedenen Breite, beispielsweise 0,4 mm, miteinander verbunden sind. Die Bemaßung eines real ausgeführten Ausführungsbeispiels ist in Fig. 9 im einzelnen angegeben, wobei die Längen- und Durchmesserangaben in Millimetern angegeben sind.

**Patentansprüche**

1. Sensor zum Umwandeln eines physikalischen Parameters eines strömenden Mediums (5) in ein elektrisches Signal, mit einem zylinderförmigen Träger (12, 42, 52, 62, 72), dessen Außenfläche vom Medium (5) angeströmt wird und der ein temperaturempfindliches Element (11) trägt, dessen Anschlußdrähte mit einer elektronischen Auswerteeinheit in Verbindung stehen, dadurch gekennzeichnet, daß beidseits an den zylinderförmigen Träger (12, 42, 52, 62, 72) in Längsrichtung je eine zylindersymmetrische Anströmkappe (14, 16; 44; 54, 56; 64, 66; 74, 76) angesetzt ist, die eine an den Träger (12, 42, 52, 62, 72) angrenzende, im wesentlichen radiale Endfläche (34, 36) sowie einen sich in vom Träger (12, 42, 52, 62, 72) abgewandter Richtung verjüngendem Querschnitt aufweist, wodurch ein hantelförmiger Sensorkopf (22) geschaffen ist.

2. Sensor nach Anspruch 1, dadurch gekennzeichnet, daß beide Anströmkappen (14, 16; 44; 54, 56; 64, 66; 74, 76) spiegelsymmetrisch zum zylinderförmigen Träger (12, 42, 52, 62, 72) angeordnet sind, und daß eine Kappe (16, 56, 66, 76) an ihrer sich verjüngenden Spitze (17) mit einem Sensorgehäuse (28) verbunden ist.

3. Sensor nach Anspruch 1 oder 2, dadurch gekennzeichnet, daß die beiden gegenüberliegenden, inneren Endflächen (34, 36) der Anströmkappen (14, 16; 44; 54, 56; 64, 66; 74, 76) senkrecht zur Mantellinie des zylinderförmigen Trägers (12, 42, 52, 62, 72) verlaufen.

4. Sensor nach Anspruch 1, 2 oder 3, dadurch gekennzeichnet, daß die Anströmkappen als Kegel (54, 56), Kegelstumpf, Kegel mit abgerundeter Kappe (14, 16, 44), Halbkugel (64, 66), Kugelkappe (74, 76) oder balliger Körper ausgebildet sind.

5. Sensor nach Anspruch 1 oder einem oder mehreren der folgenden, dadurch gekennzeichnet, daß der Träger (12, 42, 52, 62, 72) hohlzylindrisch ausgebildet ist und auf einem zylindrischen Verbindungsstück (30, 43) zwischen den Anströmkappen (14, 16; 44; 54, 56; 64, 66; 74, 76) aufgenommen ist.

6. Sensor nach Anspruch 5, dadurch gekennzeichnet, daß das Verbindungsstück (30, 43) länger als der hohlzylindrische Träger (12, 42, 52, 62, 72) ist, und daß die Anströmkappen (14, 16; 44; 54, 56; 64, 66; 74, 76) thermisch vom Träger entkoppelt sind.

7. Sensor nach Anspruch 6, dadurch gekennzeichnet, daß das Verbindungsstück (30, 43) als hohlzylindrisches Wärmeisolationsrohr ausgebildet ist, auf das der hülsenförmige Träger (12, 42) geschoben ist.

8. Sensor nach einem der Ansprüche 2 bis 7, dadurch gekennzeichnet, daß die Anströmkappen als Hohlkörper (44) ausgebildet sind.

9. Sensor nach einem der Ansprüche 1 bis 8, dadurch gekennzeichnet, daß der zylinderförmige Träger (12, 42, 52, 62, 72) aus gut wärmeleitendem Material, vorzugsweise aus Metall, und der verbleibende Teil des hantelförmigen Kopfes (22) aus schlecht wärmeleitendem Material, vorzugsweise aus Kunststoff, besteht.

10. Sensor nach Anspruch 9, dadurch gekennzeichnet, daß das temperaturempfindliche Element (11) einen Keramik-Chip aufweist, der mit Dünnfilm-Widerständen, vorzugsweise mit einer Heizschicht und einer Meßschicht beschichtet ist, und über eine gut wärmeleitende Vergußmasse in den zylinderförmigen Träger (42) eingebettet ist.

11. Sensor nach einem der Ansprüche 2 bis 10, dadurch gekennzeichnet, daß die eine Kappe (16, 56, 66, 76) an ihrer Spitze (17) über eine zunächst zylindrisches Teil (18), das sich anschließend in ein konisches Teil (20) erweitert, mit dem Sensorgehäuse (28) verbunden ist.

12. Sensor nach Anspruch 11, dadurch gekennzeichnet, daß das zylindrische Teil (18) etwa den selben Durchmesser wie der zylindrische Träger (12, 42, 52, 62, 72) aufweist, und daß sich das konische Teil (20) zu einem Durchmesser erweitert, der zumindest so groß wie der größte Durchmesser der Anströmkappen (14, 16; 44; 54, 56; 64, 66; 74, 76) ist.

## Claims

1. Sensor for converting a physical parameter of a flowing medium (5) into an electrical signal, comprising a cylindrical carrier (12, 42, 52, 62, 72), against the outer aurface of which the medium (5) flows and which carries a temperature-sensitive element (11), the connecting wires of which are connected to an electronic evaluating unit, characterised in that on both sides on the cylindrical carrier (12, 42, 52, 62, 72) in the longitudinal direction one cylindrically symmetrical flow cap (14, 16; 44; 54, 56; 64, 66; 74, 76) is in each case attached which exhibits an essentially radial end face (34, 36) adjoining the carrier (12, 42, 52, 62, 72) and a cross section tapering in a direction facing away from the carrier (12, 42, 53, 62, 72), as a result of which a dumb-bell-shaped sensor head (22) is created.

2. Sensor according to Claim 1, characterised in that the two flow cape (14, 16; 44; 54, 56; 64, 66; 74, 76) are arranged mirror-symmetrically with respect to the cylindrical carrier (12, 42, 53, 62, 72) and in that one cap (16, 56, 66, 76) is connected at its tapering point (17) to a sensor housing (28).

3. Sensor according to Claim 1 or 2, characterised in that the two opposite inner end faces (34, 36) of the flow caps (14, 16; 44; 54, 56; 64, 66; 74, 76) extend perpendicularly to the surface line of the cylindrical carrier (12, 42, 52, 62, 72).

4. Sensor according to Claim 1, 2 or 3, characterised in that the flow caps are constructed as a cone (54, 56), truncated cone, cone with rounded cap (14, 16, 44), hemisphere (64, 66), spherical cap (74, 76) or spherical body.

5. Sensor according to Claim 1 or one or more of the claims which follow, characterised in that the carrier (12, 42, 52, 62, 72) is constructed as a hollow cylinder and is accommodated on a cylindrical connecting member (30, 43) between the flow caps (14, 16; 44; 54, 56; 64, 66; 74, 76).

6. Sensor according to Claim 5, characterised in that the connecting member (30, 43) is longer than the hollow cylindrical carrier (12, 42, 52, 62, 72), and in that the flow caps (14, 16; 44; 54, 56; 64, 66; 74, 76) are thermally decoupled from the carrier.

7. Sensor according to Claim 6, characterised in that the connecting member (30, 43) is constructed as a hollow cylindrical heat insulation two onto which the sleeve-shaped carrier (12, 42) is pushed.

8. Sensor according to one of Claims 2 to 7, characterised in that the flow caps are constructed as hollow bodies (44).

9. Sensor according to one of Claims 1 to 8, characterised in that the cylindrical carrier (12, 42, 52, 62, 72) consiste of material with good thermal conductivity, preferably of metal, and the remaining part of the dumb-bell-shaped head (22) consists of arterial with poor thermal conductivity, preferably of plastic.

10. Sensor according to Claim 9, characterised in that the temperature-sensitive element (11) is a ceramic chip which is coated with thin-film resistors, preferably with a heating layer and a measuring layer, and is embedded in the cylindrical carrier (42) via a casting compound with good thermal conductivity.

11. Sensor according to one of Claims 2 to 10, characterised in that one cap (16, 56, 66, 76) is connected at its point (17), via an initially cylindrical part (18) which subsequently expands into a conical part (20), to the sensor housing (28).

12. Sensor according to Claim 11, characterised in that the cylindrical part (18) exhibits approximately the same diameter as the cylindrical carrier (12, 42, 52, 62, 72), and in that the conical part (20) expands to a diameter which is at least as large as the largest diameter of the flow caps (14, 16; 44; 54, 56; 64, 66; 74, 76).

## Revendications

1. Capteur destiné à convertir un paramètre physique d'un milieu en écoulement (5) en signal électrique, muni d'un support cylindrique (12, 42, 52, 62, 72), dont la surface extérieure est léchée par le milieu (5) et qui porte un élément sensible à la température (11), dont les fils de raccordement sont connectés à une unité de traitement électronique, caractérisé en ce que, des deux côtés du support cylindrique (12, 42, 52, 62, 72) est disposé longitudinalement respectivement un capuchon léché symétrique au cylindre (14, 16 ; 44 ; 54, 56 ; 64, 66; 74, 76) presentant une surface terminale (34, 36) sensiblement radiale et adjacente au support (12, 42, 52, 62, 72) ainsi qu'une section allant en rétrécissant dans la direction opposée au support ( 12, 42, 52, 62, 72 ), ce qui a pour résultat de former une tête de capteur (22) en forme d'haltère.

2. Capteur selon la revendication 1, caractérisé en ce que les deux capuchons léchés (14, 16 ; 44 ; 54, 56 ; 64, 66 ; 74, 76) sont disposés symmetriquement en miroir par rapport au support symétrique (12, 42, 52, 62, 72), et en ce qu'un capuchon est connecté à un bottier de capteur (28) par sa pointe rétrécie (17).

3. Capteur selon la revendication 1 ou 2, caractérisé en ce que les deux surfaces terminales intérieures opposées (34, 36) des capuchons léchés (14, 16 ; 44 ; 54, 56 ; 64, 66 ; 74, 76) s'étendent perpendiculairement à la génératrice du support cylindrique (12, 42, 52, 62, 72).

4. Capteur selon la revendication 1, 2 ou 3, caractérisé en ce que les capuchons léchés sont conformés en cône (54, 56) , cône tronque, cône à capuchon arrondi ( 14, 16, 44), demi-sphère ( 64, 66), capuchon sphérique (74, 76) ou corps en forme de boule.

5. Capteur selon la revendication 1 ou selon l'une ou plusieurs des suivantes, caractérisé en ce que le support (12, 42, 52, 62, 72) est conforme en cylindre creux et est logé, sur une pièce de jonction (30, 43), entre les capuchons léchés (14, 16 ; 44; 54, 56; 64, 66 ; 74, 76).

6. Capteur selon la revendication 5, caractérisé en ce que la pièce de jonction (30, 43) est plus longue que le support cylindrique (12, 42, 52, 62, 72), et en ce que les capuchons léchés (14, 16 ; 44; 54, 56 ; 64, 66 ; 74, 76) sont découplés thermiquement du support.

7. Capteur selon la revendication 6, caractérisé en ce que la pièce de jonction (30, 43) est conformée en tube d'isolation thermique en cylindre creux, sur lequel coulisse le support en forme de manchon (12, 42).

8. Capteur selon l'une quelconque des revendications 2 à 7, caractérisé en ce que les capuchons léchés sont conformés en corps creux (44).

9. Capteur selon l'une quelconque des revendications 1 à 8, caractérisé en ce que le support cylindrique (12, 42, 52, 62, 72) est constitué en matériau bon conducteur de chaleur, de préférence en métal, et en ce que la partie restante de la tête en forme d'haltère (22) est constituée en matériau mauvais conducteur de chaleur, de préférence en matière synthétique.

10. Capteur selon la revendication 9, caractérisé en ce que l'élément sensible à la température (11) présente une puce en céramique, recouverte de résistances à couche mince, de préférence à couche de chauffage et à couche de mesure, et est encastré dans le support cylindrique (42) au moyen d'une masse de scellement bonne conductrice de chaleur.

11. Capteur selon l'une quelconque des revendications 2 à 10, caractérisé en ce que l'un des capuchons (16, 56, 66, 76) est connecté, à son extrémité (17) au boîtier de capteur (28), par l'intermédiaire d'une partie tout d'abord cylindrique (18) s'élargissant ensuite en partie conique (20).

12. Capteur selon la revendication 11, caractérisé en ce que la partie cylindrique (18) présente approximativement le même diamètre que le support cylindrique (12, 42, 52, 62, 72), et en ce que la partie conique (20) s'élargit pour atteindre un diamètre au moins aussi grand que le plus grand diamètre des capuchons lechés (14, 16 ; 44 ; 54, 56 ; 64, 66 ; 74, 76).

Fig1

Fig. 2

EP 0 339 626 B1

Fig.3

Fig. 3a

Fig.4

Fig.5

Fig.6

Fig.7

13

Fig.8

Fig.9

$l_1 = 7{,}50 \pm 0{,}05$

$l_2 = 6{,}25$

$l_3 = 0{,}40 \pm 0{,}002$

$l_4 = 3{,}40$

$l_5 = 3{,}00$

$l_6 = 1{,}90$

$l_7 = 2{,}90$

$d_1 = 8{,}50 \pm 0{,}005$

$d_2 = 7{,}50 \pm 0{,}002$

$d_3 = 2{,}40 \pm 0{,}003$

$d_4 = 1{,}90 \pm 0{,}002$

$d_5 = 2{,}32 \pm 0{,}002$

$d_6 = 2{,}60 \pm 0{,}002$

$r_1 = 2{,}50$

$r_2 = 1{,}25$

$r_3 = 0{,}50$

$\alpha = 7{,}50°$